# EUROPEAN PATENT SPECIFICATION

(11) **EP 4 137 260 B1**
(45) Date of publication and mention of the grant of the patent: **16.09.2026**
(21) Application number: 21788603.5
(22) Date of filing: 18.03.2021
(51) Int. Cl.: B23K 9/173, B23K 9/073

(54) **ASSEMBLY COMPRISING COATED STEEL-MADE MEMBERS JOINED WITH AN ARC WELDED JOINT AND ARC WELDING METHOD**
BAUGRUPPE AUS BESCHICHTETEN STAHLELEMENTEN VERBUNDEN MIT EINER LICHTBOGENSCHWEISSVERBINDUNG UND LICHTBOGENSCHWEISSVERFAHREN
ASSEMBLAGE COMPOSÉ D'ÉLÉMENTS EN ACIER REVÊTUS ASSEMBLÉS PAR UN JOINT SOUDÉ À L'ARC ET UN PROCÉDÉ DE SOUDAGE À L'ARC

(30) Priority: 15.04.2020 JP 2020072716
(43) Date of publication of application: 22.02.2023
(73) Proprietor: JFE Steel Corporation, Tokyo 100-0011 (JP)
(72) Inventor: KONISHI, Kyohei, Tokyo 100-0011 (JP); SAWANISHI, Chikaumi, Tokyo 100-0011 (JP); MATSUDA, Hiroshi, Tokyo 100-0011 (JP); MURAKAMI, Yoshiaki, Tokyo 100-0011 (JP)
(74) Representative: Grünecker Patent- und Rechtsanwälte PartG mbB
(86) International application number: PCT/JP2021/010961
(87) International publication number: WO 2021/210335

(56) References cited:
- WO-A1-2014/126246
- JP-A- 2009 255 125
- JP-A- 2018 024 019
- JP-A- S50 141 554
- JP-A- S62 248 568
- US-A1- 2016 008 906
- US-B2- 9 616 528

## Description

### Technical Field

The present invention relates to a member for electrodeposition coating comprising an arc welded joint excellent in terms of corrosion resistance which can preferably be used for the chassis members of an automobile and the like and to an arc welding method for manufacturing the same.

### Background Art

Nowadays, regarding the members used for an automobile body, there are increasing needs for not only increased strength and rigidity for the purpose of improving the safety and reliability of the automobile body but also decreased weight for the purpose of improving fuel efficiency. As a result, the thickness of a steel sheet for the members is being decreased by using a high strength steel sheet. On the other hand, for various members used for an automobile, and particularly, for chassis members (for example, a lower arm and the like), from the viewpoint of the strength and rigidity of members, a steel sheet having a thickness larger than that of a steel sheet used for an automobile body is used. Therefore, by increasing the strength of a steel sheet used for chassis members, thereby realizing an additional decrease in the thickness of a steel sheet, it is possible to realize an additional decrease in the weight of an automobile body. Consequently, it is possible to realize an improvement in fuel efficiency while the strength and rigidity of members are maintained.

Generally, members used in a corrosive environment are subjected to a rust prevention treatment such as chemical conversion coating and electrodeposition coating to achieve corrosion resistance after welding has been performed. However, there may be a case where rust or corrosion is observed in a weld and a portion in the vicinity of the weld as time passes. In the case of a member which has been subjected to electrodeposition coating as described above, corrosion tends to start at a weld, extends in the weld and a wide region surrounding the weld while being accompanied by coating film blister as time passes, and progresses also in the thickness direction. In the case where corrosion progresses in such a way, there is a decrease in the thickness of the weld and a portion in the vicinity of the weld, which results in a decrease in the strength of not only the weld but also the member. That is, in the case where corrosion occurs in members whose weld is subjected to a load (for example, the chassis members of an automobile and the like) and progresses, there may be a case where the member fractures.

In the case where electrodeposition coating is performed, after chemical conversion coating (for example, a zinc phosphate treatment or the like) is first performed on a base steel sheet and a weld metal as a pretreatment to improve the adhesion property of an electrodeposition coating film to the base steel sheet and the weld metal, electrodeposition coating is performed. A zinc phosphate treatment, which is widely used as an example of chemical conversion coating, is a technique in which zinc phosphate crystal grains are grown on the surface of the base steel sheet and the weld metal to improve the adhesion property of a coating film in electrodeposition coating. However, in the case of the conventional technique, even when chemical conversion coating is performed on a member before electrodeposition coating is performed, coating film blister often occurs in a weld and a wide region surrounding the weld as time passes. That is, in the case of the technique where electrodeposition coating is performed after chemical conversion coating described above has been performed as a pretreatment, it is difficult to completely inhibit corrosion starting at a weld from occurring.

Therefore, investigations are being conducted regarding a technique in which a steel sheet having a plated layer (for example, a zinc-based plated layer and the like) is used. Although, in the case of a steel sheet having a plated layer, it is not possible to avoid an increase in manufacturing costs compared with the case of an ordinary steel sheet due to additional costs caused by a plating treatment, it is possible to expect the effect of improving corrosion resistance due to a plated layer.

However, even in the case of members for which a steel sheet having a plated layer is used, an arc welding method is used as a joining method as in conventional cases. Therefore, in a weld which is subjected to a high temperature due to arc plasma (hereinafter, referred to as "arc"), which is a heat source, since a plated layer is vaporized, a local un-plated portion is exposed. Therefore, it is not possible to expect a significant improvement in corrosion resistance commensurate with an increase in cost due to the use of a steel sheet having a plated layer.

As described above, although various manufacturing techniques have been developed to improve the corrosion resistance of members, all of such techniques have both advantages and disadvantages. Therefore, from the viewpoint of improving corrosion resistance while inhibiting an increase in manufacturing costs, investigations are being conducted regarding a technique for more effectively preventing corrosion starting at a weld from occurring and progressing.

Examples of a conventionally known starting point in a weld at which corrosion occurs include the following.
(a) slag adhering to a weld (mainly the surface of a weld bead)
(b) welding fume adhering to a weld
(c) oxide formed on the surface of a steel sheet subjected to a high temperature due to welding

Even when a member having the adhering substance described in item (a) or (b) above or the oxide described in item (c) above in a weld is subjected to chemical conversion coating, the formation of a region which is not coated with a chemical conversion coating layer formed of zinc phosphate crystal grains starts at the adhering substance or the formed substance, and such a region is locally retained.

In addition, in such a region which is not coated with a chemical conversion coating layer, even when electrodeposition coating is performed, since there is insufficient formation of a coating film, and since there is an insufficient adhesion property of a coating film, there is a significant deterioration in corrosion resistance. As a result, there is a decrease in thickness due to corrosion occurring and progressing. Therefore, investigations are being conducted regarding a technique for preventing the formation of the adhering substance described in item (a) or (b) above or the oxide described in item (c) above.

For example, Patent Literature 1 discloses a technique in which, after arc welding has been performed and before electrodeposition coating is performed, a weld and a portion in the vicinity of the weld is subjected to a spraying treatment or an immersion treatment by using a non-oxidizing acidic solution having a pH of 2 or less at a temperature of 30°C to 90°C. This technique is a technique for removing the slag described in item (a) above, the welding fume described in item (b) above, and the oxide described in item (c) above by dissolving a weld bead and a steel sheet with the non-oxidizing solution.

However, in the case of the technique disclosed in Patent Literature 1, since it is necessary to wash away the acidic solution before electrodeposition coating is performed, the manufacturing process of members becomes complex. In addition, since a member having a desired shape is formed of steel sheets having various shapes which are overlapped and welded together, an acidic solution which is retained in gaps between the overlapped steel sheets causes severe corrosion. Moreover, since a large amount of acidic solution is used, breakdown and corrosion tend to occur in manufacturing equipment due to the equipment being exposed to a corrosive environment, and it is necessary to ensure the safety of operators by preventing fume from scattering.

Patent Literature 2 discloses a technique in which the amounts of oxidizing gases (that is, CO₂ and O₂) contained in a gas for shielding a weld (hereinafter, referred to as "shielding gas") when arc welding is performed are decreased. This technique is a technique for inhibiting the formation of slag when welding is performed, the oxidization of a welded heat affected zone, and the adhesion of welding fume.

However, in the case where the amounts of oxidizing gases in a shielding gas are decreased, a weld bead becomes unstable due to an arc becoming unstable, which results in poor weld penetration. Since such a weld defect causes a decrease in joint strength, it is difficult to apply the technique disclosed in Patent Literature 2 to members such as chassis members which are required to have sufficient strength and rigidity.

Patent Literature 3 discloses a technique in which the formation of slag is inhibited by decreasing the total of the contents of Si and Mn in a welding wire used in arc welding and the contents of Si and Mn in a steel sheet used.

However, in the case where the Si content and the Mn content are decreased from the viewpoint of inhibiting slag formation, it is not possible to avoid a decrease in the strength of a steel sheet. That is, in the case of the technique disclosed in Patent Literature 3, since a steel sheet having a large thickness has to be used to achieve sufficient strength of members, it is difficult to realize a weight reduction of an automobile body.

Patent Literature 4 discloses a technique in which, even in the case of a weld bead containing slag, welding fume, and oxides, a chemical conversion coating layer is sufficiently formed by controlling the chemical composition of a treatment solution used in chemical conversion coating. In this technique, the formation of a chemical conversion coating layer is facilitated by performing a surface treatment with a surface conditioning solution containing a zinc phosphate colloid. Moreover, by performing chemical conversion coating with a zinc phosphate treatment solution containing F in an amount of 100 mass ppm or more, slag, welding fume, and oxides are dissolved and removed, which results in an improvement in the adhesion property of an electrodeposition coating film.

However, in the case of the technique disclosed in Patent Literature 4, since a zinc phosphate treatment solution containing fluorine, which is designated as a poisonous substance, is used, it is necessary to decrease the fluorine content in liquid waste generated from the treatment solution to a level satisfying environmental standards, when the liquid waste is discharged from a factory. Therefore, large liquid waste disposal equipment is necessary in addition to the manufacturing equipment for members.

Patent Literatures 5 and 6 each disclose a member comprising an arc welded joint and a method for manufacturing the same having the features of the preambles of claims 1 and 2.

### Citation List

### Patent Literature

PTL 1: Japanese Unexamined Patent Application Publication No. 9-20994
PTL 2: Japanese Unexamined Patent Application Publication No. 8-33982
PTL 3: Japanese Unexamined Patent Application Publication No. 8-33997
PTL 4: Japanese Patent No. 5549615
PTL 5: US 9,616,528 B2
PTL 6: US 2016/008906 A1

### Summary of Invention

### Technical Problem

The present invention has been completed to solve the problems of the conventional techniques, and an object of the present invention is to provide an arc welded joint excellent in terms of corrosion resistance which can preferably be used for various steel-made members (for example, the chassis members of an automobile and the like) which are subjected to electrodeposition coating before use and an arc welding method for forming the joint.

### Solution to Problem

To solve the problems described above, the present inventors conducted investigations regarding the reasons for a deterioration in corrosion resistance in a weld of a steel-made member which has been subjected to electrodeposition coating (hereinafter, referred to as "coated steel-made member").

A deterioration in the corrosion resistance of the weld of the coated steel-made member is caused by slag and welding fume adhering to the weld (that is, a weld bead and a welded heat affected zone) and oxides formed on the surface of a steel sheet subjected to a high temperature due to arc welding. Generally, in the case where a zinc phosphate treatment is performed as chemical conversion coating before electrodeposition coating is performed on a member which has been manufactured by a steel sheet subjected to work, the steel sheet is dissolved due to the etching function of the zinc phosphate treatment solution. In addition, since there is an increase in pH in a local region at a solid-liquid interface due to hydrogen ions being consumed due to the dissolution of the steel sheet, zinc phosphate crystal grains (that is, a chemical conversion coating layer) are precipitated on the surface of the steel sheet. However, since slag, welding fume, and other kinds of oxides exist on the weld of the steel sheet, there is a deterioration in dissolubility in a zinc phosphate treatment solution. As a result, it is difficult for zinc phosphate crystal grains to be precipitated. Therefore, since a chemical conversion coating layer is not sufficiently formed on a weld, it is not possible to achieve a sufficient adhesion property of a coating film when electrodeposition coating is performed thereafter. This is the reason why there is a deterioration in the corrosion resistance of the weld of a coated steel-made member.

That is, in the case where it is possible to sufficiently precipitate zinc phosphate crystal grains in a weld, since it is possible to improve the adhesion property of an electrodeposition coating film, it is possible to improve the corrosion resistance of the weld.

Therefore, the present inventors conducted investigations regarding a technique with which it is possible to improve corrosion resistance by densely precipitating zinc phosphate crystal grains on a weld. As a result, it was found that, to improve the corrosion resistance of the weld, decreasing the amount of slag adhering to the weld is most effective. However, in the case of a member manufactured by using a high strength steel sheet and a high strength welding wire, since there is an increase in the contents of Si, Mn, Ti, and the like due to the member having a high alloy chemical composition, there is a problem of an increase in the amount of slag formed in the weld.

By inhibiting the oxidation of Si, Mn, Ti, and the like contained in a steel sheet and a welding wire, it is possible to solve such a problem. That is, by using a shielding gas containing oxidizing gases in decreased amounts, since it is possible to inhibit the oxidation of such elements, it is possible to decrease the amount of slag formed. However, in the case where the contents of oxidizing gases in a shielding gas are decreased, since a cathode spot severely moves around when arc welding is performed, the arc becomes unstable. As a result, there are new problems of oxygen incorporation into a weld pool due to atmospheric air entrainment and a deterioration in weld bead shape.

On the other hand, in the case where an increase in the strength of a coated steel-made member is intended, it is not possible to avoid an increase in the contents of Si, Mn, Ti, and the like.

From the results of investigations conducted by the present inventors, inhibiting the formation of slag adhering to the weld bead to sufficiently precipitate a chemical conversion coating layer while maintaining arc stability to form a weld bead having a good shape is effective for improving the corrosion resistance of a member. Moreover, it is possible to further improve corrosion resistance by promoting the precipitation of a chemical conversion coating layer as a result of the following.
(A) decreasing the amount of welding fume adhering to a weld bead toe
(B) decreasing the amounts of oxides formed on the surface of a steel sheet due to welding
(C) removing oxides (so-called mill scale) formed on the surface of a steel sheet in a process for manufacturing the steel sheet

The present invention has been completed on the basis of the findings described above and is as specified in the independent claims. Preferred embodiments thereof are specified in the dependent claims.

### Advantageous Effects of Invention

According to the present invention, since it is possible to improve the corrosion resistance of the welds of various kinds of members such as chassis members, it is possible to improve the rust prevention performance of members made of a high strength steel sheet and members which are used in a strongly corrosive environment. According to the present invention, it is possible to manufacture various kinds of members by using a high strength steel sheet having a tensile strength of, for example, 440 MPa or higher (for example, a steel sheet of a 440 MPa class, a steel sheet of a 590 MPa class, and a steel sheet of a 980 MPa class) and to improve the corrosion resistance thereof, which has a significant effect on the industry. In addition, by using a high strength steel sheet, it is also possible to decrease the thickness of the members.

### Brief Description of Drawings

[Fig. 1] Fig. 1 is a schematic perspective diagram illustrating an example in which the present invention is used for lap fillet welding.
[Fig. 2] Fig. 2 is a schematic perspective diagram illustrating an example of a weld bead formed by performing lap fillet welding illustrated in Fig. 1.
[Fig. 3] Fig. 3(a) and Fig. 3(b) are enlarged schematic cross-sectional diagrams illustrating a welding wire and a portion in the vicinity of the wire illustrated in Fig. 1 and a manner in which a short circuit transfer occurs.
[Fig. 4] Fig. 4 is a graph illustrating a pulse current waveform of current applied as welding current.
[Fig. 5] Fig. 5 is a schematic perspective diagram illustrating a weld bead toe and weld bead start/finish end portions formed by performing lap fillet welding illustrated in Fig. 1.

### Description of Embodiments

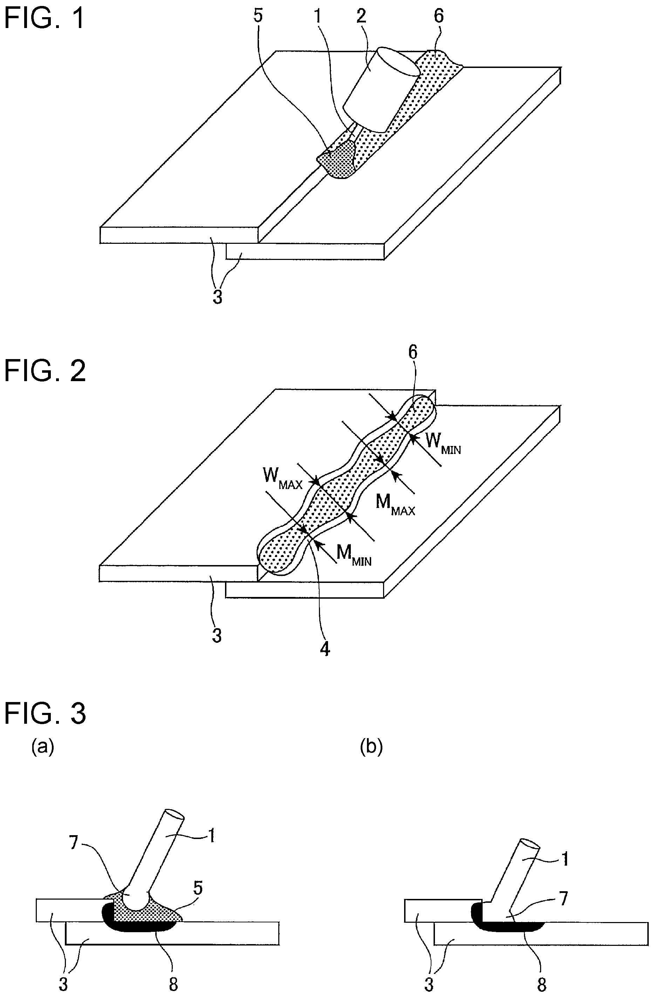

Hereafter, with reference to Figs. 1 to 5, an example in which the present invention is used for lap fillet welding will be described. However, the present invention may be used for not only lap fillet welding but also various welding techniques (for example, butt welding and the like).

Here, the present invention is intended for arc welding performed on at least two steel sheets, and Fig. 1 illustrates one example in which two steel sheets are welded.

In the present invention, for example, as illustrated in Fig. 1, by using a welding wire 1, which is continuously fed through the center of a welding torch 2 from the welding torch 2 to steel sheets (base materials) 3 (in detail, for example, a welding line corresponding to the corner of a step formed by two steel sheets 3 as base materials, overlapped with each other), and the steel sheets 3 as electrodes, a welding voltage is applied from a welding power source (not illustrated). As a result of a portion of shielding gas (not illustrated) fed from inside the welding torch 2 being ionized to form plasma, an arc 5 is formed between the welding wire 1 and the steel sheets 3. In addition, the other portion of the shielding gas, which is not ionized and which flows from the welding torch 2 to the steel sheets 3, has a role in sealing the arc 5 and a weld pool (not illustrated in Fig. 1), which is formed due to the steel sheet 3 being melted, from outside air. The front end of the welding wire 1 is melted by the heat of the arc 5 to form a droplet, and the droplet is transported to the weld pool by an electromagnetic force, gravity, and the like. As a result of such a phenomenon occurring continuously due to the movement of the welding torch 2 or the steel sheets 3, the weld pool is solidified to form a weld bead 6 on the rear side of the welding line. Consequently, the joining of the two steel sheets is completed.

As illustrated in Fig. 1, when two steel sheets 3 are overlapped with each other to perform lap fillet welding by using an arc welding method, since O₂ or CO₂ mixed in the shielding gas is heated by the arc 5, a reaction expressed by formula (4) or formula (5) progresses.

O₂ -> 2[O] ··· (4)

CO₂ -> CO + [O] ··· (5)

When oxygen generated due to such a decomposition reaction is dissolved in a molten metal 7 or a weld pool 8 (refer to Fig. 3(a) and Fig. 3(b)), the oxygen is retained in a weld metal in the form of bubbles when the molten metal or the weld pool 8 is cooled and solidified to form the weld metal. In addition, since an oxidation reaction between oxygen and iron progresses, there may be a case of a deterioration in the mechanical properties of the weld metal.

To solve such a problem, a welding wire 1 and a steel sheet 3 to which non-ferrous metals such as Si, Mn, Ti, and the like are added as deoxidizing agents are used. That is, by discharging oxygen which is generated due to a reaction expressed by formula (4) or formula (5) in the form of slag formed of SiO₂, MnO, TiO₂, and the like, a reaction between oxygen and iron is inhibited.

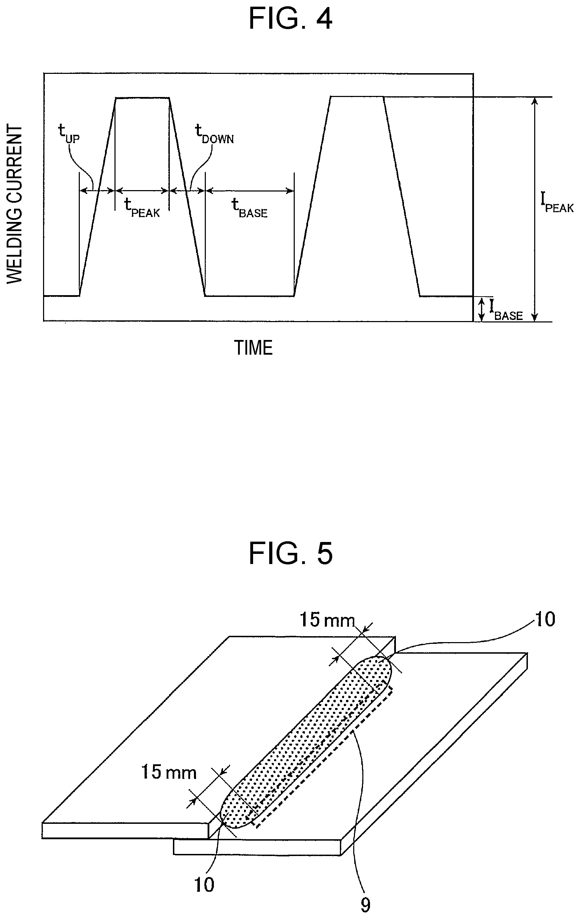

Slag which has been discharged to the surface of the weld pool 8 is aggregated in a subsequent cooling process, allowed to adhere to the surface of the weld bead 6 and a weld bead toe 9 (that is, a weld bead) (refer to Fig. 5), and solidified. In the case of an arc welded joint in which slag adheres to a weld bead in such a manner, a chemical conversion coating layer is not sufficiently formed even when chemical conversion coating is performed on the arc welded joint. Moreover, since slag is a nonconductor, it is difficult to form a uniform electrodeposition coating film. Therefore, it is necessary to inhibit the formation of slag while preventing a deterioration in the mechanical properties of a weld metal by using a welding wire 1 and a steel sheet 3 containing deoxidizing agents.

Here, the weld bead toe 9 and the weld bead start/finish end portions 10 will be described with reference to Fig. 5. As illustrated in Fig. 5, in the present invention, the term "weld bead start/finish end portions" denotes a weld bead start end portion and a weld bead finish end portion. The term "weld bead start end portion" denotes a region of the weld bead from a weld bead start end position (welding start position) to a point on the welding line located 15 mm toward a weld bead finish end position (welding finish position), and the term "weld bead finish end portion" denotes a region of the weld bead from the weld bead finish end position to a point on the welding line located 15 mm toward the weld bead start end position. In the present invention, the term "weld bead toe" denotes a boundary in a direction perpendicular to the welding line of the weld bead between the weld metal and the unmelted base steel sheet.

Therefore, in the present invention, by using a shielding gas containing mainly Ar gas, there is a decrease in the amount of O₂ and CO₂ mixed in, which results in the formation of slag being inhibited. Specifically, when the area of the surface of the weld bead 6 is defined as a weld bead surface area S_{BEAD} (mm²) and, of the weld bead surface area S_{BEAD}, the area of the region covered with slag is defined as a slag surface area S_{SLAG} (mm²), a slag-coverage area ratio S_{AATIO} (%) calculated by using equation (1) is set to be 15% or less. Moreover, since the aggregation of slag on the surface of the weld bead 6 is inhibited in the case where there is a decrease in the amount of slag formed, it is preferable that the slag-coverage area ratio S_{RATIO} be 9% or less or more preferably 5% or less.

Furthermore, the lower the amount of non-conducting slag formed, the better the chemical conversion coatability and the electrodeposition coatability. Therefore, since it is preferable that the slag-coverage area ratio S_{RATIO} be as small as possible, there is no particular limitation on the lower limit of the slag-coverage area ratio S_{RATIO}. It is preferable that the slag-coverage area ratio S_{RATIO} be 0.1% or more. ${S}_{RATIO} = 100 \times {S}_{SLAG} / {S}_{BEAD}$

To prevent slag from being non-uniformly distributed on the surface of the weld bead 6, it is necessary to stabilize the shape of the weld bead 6.

Therefore, in the present invention, a weld bead width ratio W_{RATIO} (%) calculated by using equation (2) from the maximum value W_{MAX} (mm) and the minimum value W_{MIN} (mm) of a weld bead width (refer to Fig. 2) in a direction perpendicular to a line parallel to the welding direction of the weld bead 6 (hereinafter, referred to as "welding line") is set to be 60% or more. By decreasing a variation in weld bead width (that is, by decreasing a difference between W_{MAX} and W_{MIN}), the shape of the weld bead 6 becomes stable. As a result, it is possible to keep heat input to the weld bead constant. That is, it is possible to form a weld bead 6 having uniform surface quality. Therefore, it is possible to obtain a uniform chemical conversion coating layer formed by performing chemical conversion coating and a uniform coating film formed by performing electrodeposition coating. Moreover, as a result of a difference between W_{MAX} and W_{MIN} being decreased, it is possible to inhibit the formation of a local treatment solution pool at a position corresponding to W_{MIN} when chemical conversion coating or electrodeposition coating is performed. Therefore, it is preferable that the weld bead width ratio W_{RATIO} be 70% or more or more preferably 80% or more.

Here, there is no particular limitation on the upper limit of the weld bead width ratio W_{RATIO}. It is preferable that the weld bead width ratio W_{RATIO} be 100% or less. ${W}_{RATIO} = 100 \times {W}_{MIN} / {W}_{MAX}$

It is preferable that arc welding be performed with the steel sheet 3 being set at the cathode and with the welding wire 1 being set at the anode (that is, with so-called reverse polarity). By using the reverse polarity, since a cathode spot, which is an electron-emitting source, is formed on the steel sheet 3, a region 4 (a so-called cleaning region), in which oxides (for example, mill scale formed in the manufacturing process of the steel sheet 3, oxides formed due to heat input when welding is performed, and the like) formed on the surface of the steel sheet 3 are removed, is formed.

In the case where a distance in a direction perpendicular to the welding line between the outer edge of the cleaning region 4 and the toe of the weld bead 6, that is, a cleaning width M (refer to Fig. 2), is excessively small, oxides remain in the vicinity of the toe of the weld bead 6. Consequently, since a chemical conversion coating layer formed by performing chemical conversion coating and a coating film formed by performing electrodeposition coating become non-uniform, corrosion tends to progress in the weld bead. Therefore, it is preferable that the minimum value M_{MIN} (mm) of the cleaning width M (mm) be 0.5 mm or more, more preferably 2.0 mm or more, or even more preferably 4.0 mm or more.

On the other hand, in the original portion of a steel sheet which is not affected by welding heat, it is not possible to expect that there is an improvement in chemical conversion coatability or electrodeposition coatability due to a cleaning function. In addition, in the case where a region in which cathode spot formation occurs is wide, arc discharge becomes unstable. Therefore, it is preferable that the maximum value M_{MAX} (mm) of the cleaning width M (mm) be 8.0 mm or less.

By performing arc welding with reverse polarity, the welding wire 1 is set at the anode, and the steel sheet 3 is set at the cathode. Then, as a result of a welding voltage being applied through the welding wire 1, which is continuously fed through the center of the welding torch 2 to the steel sheets 3, a portion of shielding gas, which is fed from inside the welding torch 2, is ionized to form plasma. Consequently, the arc 5 is formed between the welding wire 1 and the steel sheets 3. The remaining shielding gas (that is, the portion of the gas, which is not ionized and which flows from the welding torch 2 to the steel sheets 3) seals the arc 5, the molten metal 7, and the weld pool 8 from outside air (refer to Fig. 3). Consequently, oxygen incorporation (that is, the formation of slag) and nitrogen incorporation (that is, the formation of blow holes) are prevented.

The front end of the welding wire 1 is melted by the heat of the arc 5 to form molten metal 7, and the droplet of the molten metal 7 is transported to the weld pool 8 by an electromagnetic force, gravity, and the like. At this time, a state in which the molten metal 7 is separated from the weld pool 8 (refer to Fig. 3(a)) and a state in which the molten metal 7 is in contact with the weld pool 8, that is, a short circuit state, (refer to Fig. 3(b)) are alternately repeated regularly. Then, as a result of such a phenomenon occurring continuously while the welding wire 1 is moved in the welding line direction, the weld pool 8 is solidified to form a weld bead 6 on the rear side of the welding line.

In the case of arc welding utilizing Ar gas as a shielding gas, since the amount of oxygen which is mixed in the molten metal 7 and the weld pool 8 is significantly small, the effect of preventing the formation of slag is realized. However, since a cathode spot severely moves around, there is a disadvantage in that the weld bead 6 tends to meander or to have a wavy shape. Here, the chemical composition of the Ar gas described above is a chemical composition containing Ar in an amount of 99.0% or more in terms of volume fraction. Such a shielding gas containing mainly the Ar gas described above is also referred to as an "Ar shielding gas".

To eliminate such a disadvantage, in arc welding, the cycle at which a short circuit occurs between the welding wire 1 and the steel sheet 3 (hereinafter, referred to as "short circuit cycle") and the frequency with which such a short circuit occurs (hereinafter, referred to as "short circuit frequency") are specified in the present invention. Specifically, it is preferable that the maximum value of the short circuit cycle T_{CYC} (s) be 1.5 s or less and that the average value of the short circuit frequency (average short circuit frequency) F_{AVE} (Hz) be 20 Hz to 300 Hz.

By specifying the maximum value of the short circuit cycle and the average short circuit frequency to realize stable droplet transfer, since it is possible not only to inhibit the formation of slag but also to realize stable arc discharge, it is possible to form a weld bead 6 in which the slag-coverage area ratio S_{RATIO} and the weld bead width ratio W_{RATIO} are within the ranges described above.

In the case where the volume of the droplet formed from the front end of the welding wire 1 is excessively large or small, the weld pool 8 becomes unstable. Specifically, in the case where the average short circuit frequency F_{AVE} is less than 20 Hz, large droplets are transferred to the weld pool 8, or droplet transfer modes other than a short circuit transfer mode (for example, streaming transfer mode and the like) are mixed irregularly. In addition, in the case where the average short circuit frequency F_{AVE} is more than 300 Hz, although the size of droplets is small, arc reignition due to a short circuit occurs excessively often. For such reasons, in any of such cases, since the weld pool 8 is disturbed, it is difficult to eliminate the meandering or wavy shape of the weld bead. That is, by controlling the average short circuit frequency F_{AVE} to be 20 Hz to 300 Hz, it is possible to control the volume of a droplet which is transferred to the weld pool 8 in one short circuit cycle to be about the same as that of a sphere having a diameter equal to that of the welding wire 1. As a result, it is possible to stabilize droplet transfer.

To eliminate a variation in the volume of a droplet which is transferred to the weld pool 8 in one short circuit cycle so that there is an improvement in the uniformity of the weld bead, it is more preferable that the average short circuit frequency F_{AVE} be 35 Hz or more or even more preferably 50 Hz or more. In addition, in the case where the average short circuit frequency F_{AVE} is large, there may be a case where droplets having small volumes are scattered in the form of a large number of spatters at the times of a short circuit and reignition. Therefore, it is more preferable that the average short circuit frequency F_{AVE} be 250 Hz or less or even more preferably 200 Hz or less.

In addition, in the case where the maximum short circuit cycle T_{CYC} is more than 1.5 s, since droplet transfer becomes unstable, the weld bead width and a penetration depth become unstable. That is, by controlling the maximum short circuit cycle T_{CYC} to be 1.5 s or less, it is possible to form a weld bead 6 having a good shape. The term "maximum short circuit cycle T_{CYC}" denotes the maximum value of a short circuit cycle in a welding pass for forming an arc welded joint. This means that any of the short circuit cycles in a welding pass does not exceed 1.5 s.

By specifying the average short circuit frequency F_{AVE} and the maximum short circuit cycle T_{CYC} as described above, regular and stable droplet transfer is possible in arc welding utilizing an Ar shielding gas. Here, to control the average short circuit frequency F_{AVE} described above to be 20 Hz or more, it is more preferable that the maximum short circuit cycle T_{CYC} be 1.0 s or less or even more preferably 0.2 s or less. In addition, it is sufficient that the maximum short circuit cycle T_{CYC} be within a range in which the average short circuit frequency F_{AVE} becomes 300 Hz or less, and it is preferable that the maximum short circuit cycle T_{CYC} be 0.004 s or more.

The term "average short circuit frequency F_{AVE}" denotes the average value of a short circuit frequency in a welding pass for forming an arc welded joint. That is, when a change in the arc voltage in a welding pass is measured by using a measuring device (for example, oscilloscope and the like) to count the number of times that the arc voltage becomes zero, the average short circuit frequency F_{AVE} is defined as a value obtained by dividing the number of times by the time (s) required for the welding pass (number/s = Hz).

Here, examples of preferable welding conditions include welding current: 150 A to 300 A, arc voltage: 20 V to 35 V, Ar gas flow rate: 15 Liter/min to 25 Liter/min, distance L between the steel sheet 3 and a contact tip (hereinafter, referred to as "CTWD"): 5 mm to 30 mm, and the like. Here, the welding current and the arc voltage are represented by their respective average values in a welding pass.

Moreover, there is no particular limitation on the methods used for controlling the average short circuit frequency and the maximum short circuit cycle to be within the ranges described above. For example, by performing current waveform control utilizing pulse current as illustrated in Fig. 4, when a peak current is defined as I_{PEAK} (A), a base current is defined as I_{BASE} (A), a peak time is defined as t_{PEAK} (ms), a rise time is defined as t_{UP} (ms), a fall time is defined as T_{DOWN} (ms), and CTWD is defined as L (mm), as a result of X (A·s/m) calculated by using equation (3) below satisfying the relational expression 50 ≤ X ≤ 250, it is possible to more effectively realize the effect of the present invention. $X = \left({I}_{PEAK}\times {t}_{PEAK}/L\right) + \left({I}_{PEAK}+{I}_{BASE}\right) \times \left({t}_{UP}+{t}_{DOWN}\right) / \left(2\times L\right)$

In the case where the value of X (A·s/m) calculated by using equation (3) is excessively small, there may be a case where the arc 5 sways and/or droplet transfer becomes unstable. On the other hand, in the case where the value of X is excessively large, there may be a case where the welding wire 1 plunges in the weld pool 8 or a case where a grown droplet flies apart at the time of a short circuit, resulting in a deterioration in weld bead shape, spatter adhesion, and the like. Therefore, it is preferable that the value of X satisfy the relational expression 50 ≤ X ≤ 250 or more preferably 60 ≤ X ≤ 230. It is even more preferable that the value of X be 80 or more and that the value of X be 200 or less. Here, "s" used in the unit of X (A·s/m) denotes "seconds", and the unit of t_{PEAK}, t_{UP}, and t_{DOWN} (ms) is "milliseconds" (= 1/1000 seconds) .

In addition, in the case where the value of the distance L between the steel sheet 3 and the contact tip is excessively small, since severe wear occurs in the welding torch 2, welding becomes unstable. In the case where the value of the distance L between the steel sheet 3 and the contact tip is excessively large, the arc 5 sways. Therefore, it is preferable that the value of L be 5 mm to 30 mm or more preferably 8 mm to 20 mm.

In the case where the value of I_{PEAK} is excessively small, since it is not possible to achieve sufficient heat input, there is a deterioration in weld bead shape. In the case where the value of I_{PEAK} is excessively large, burn through occurs, and there is an increase in the number of spatters. Therefore, it is preferable that I_{PEAK} be 250 A to 600 A. It is more preferable that I_{PEAK} be 400 A or more and that I_{PEAK} be 500 A or less.

In the case where the value of I_{BASE} is excessively small, arc becomes unstable. In the case where the value of I_{BASE} is excessively large, burn through occurs. Therefore, it is preferable that I_{BASE} be 30 A to 120 A. It is more preferable that I_{BASE} be 40 A or more and that I_{BASE} be 100 A or less.

In the case where the value of t_{PEAK} is excessively small, it is not possible to achieve sufficient heat input. In the case where the value of t_{PEAK} is excessively large, burn through occurs. Therefore, it is preferable that t_{PEAK} be 0.1 ms to 5.0 ms. It is more preferable that t_{PEAK} be 1.0 ms or more and that t_{PEAK} be 4.5 ms or less.

In the case where t_{UP} or t_{DOWN} is excessively small, arc sway is induced. In the case where t_{UP} or t_{DOWN} is excessively large, there is a deterioration in weld bead shape. Therefore, it is preferable that each of t_{UP} and t_{DOWN} be 0.1 ms to 3.0 ms. It is more preferable that each of t_{UP} and t_{DOWN} be 0.5 ms or more and that each of t_{UP} and t_{DOWN} be 2.5 ms or less.

When the base time of the pulse current is defined as t_{BASE} (ms), although t_{BASE} is not used in equation (3), which is used for calculating the value of X, in the case where t_{BASE} is excessively small, there is an excessive decrease in the size of a droplet. In the case where t_{BASE} is excessively large, there is an excessive increase in the size of a droplet. In any of such cases, welding becomes unstable. Therefore, it is preferable that t_{BASE} be 0.1 ms to 10.0 ms. It is more preferable that t_{BASE} be 1.0 ms or more and that t_{BASE} be 8.0 ms or less.

Furthermore, in the present invention, it is not necessary that a short circuit occur in every cycle of the pulse current. It is sufficient that a short circuit occur once in one to several pulses. In addition, as long as a short circuit occurs once in one to several pulses, there is no particular limitation on the pulse frequency of the pulse current.

In the present invention, the purpose of using the pulse current is (1) to promote the stable growth of the droplet in the base time while inhibiting the arc from swaying by applying lower current and (2) to promote a short circuit in the peak time and the fall time by pushing down the grown droplet to the weld pool by using electromagnetic force and the shearing force of the Ar shielding gas without separating the grown droplet from the wire.

In the present invention, it is not necessary to feed oxygen or to add special elements. Therefore, by using a solid wire, which is less expensive than a flux-cored wire, as a welding wire, it is possible to realize a decrease in process costs.

Here, the solid wire which can preferably be used in the present invention has a wire chemical composition containing C: 0.020 mass% to 0.250 mass%, Si: 0.05 mass% to 1.50 mass%, Mn: 0.50 mass% to 3.0 mass%, P: 0.020 mass% or less, S: 0.03 mass% or less, and a balance of Fe and incidental impurities. It is preferable that the diameter of the solid wire be 0.4 mm to 2.0 mm.

### EXAMPLES

The member and arc welding method according to the present invention will be described in detail in accordance with examples.

By performing lap fillet welding (refer to Fig. 1) on two steel sheets (having a thickness of 2.6 mm each) having one of the chemical compositions given in Table 1, an arc welded joint was formed. The welding conditions are given in Table 2. The chemical compositions of the welding wires (having a diameter of 1.2 mm each) denoted by wire codes given in Table 2 are given in Table 4. Here, the remainder which was different from the constituents given in Table 1 or Table 4 was incidental impurities. After having performed alkaline degreasing, surface conditioning, and zinc phosphate-based chemical conversion coating on the formed arc welded joint, cation electrodeposition coating was performed under a condition in which the film thickness on the flat base steel sheet other than the weld was 15 µm. Subsequently, a corrosion test in accordance with SAE J 2334 was performed for 60 cycles.

Here, the weld bead surface area S_{BEAD} and the slag surface area S_{SLAG} were derived by taking the image of the surface of the region of the weld bead 6 excluding the weld bead start/finish end portions 10 (having a length of 15 mm each) from directly above and by measuring the projected areas of the weld bead and slag viewed from above. In the case of a weld bead 6 having a length of less than 130 mm, the image of the surface of the full length of the weld bead 6 excluding the weld bead start/finish end portions 10 was taken. In the case of a weld bead 6 having a length of 130 mm or more, the image of the surface of a portion (having a length of 100 mm) of the weld bead 6 excluding the weld bead start/finish end portions 10 was taken. The slag-coverage area ratio S_{AATIO} was derived by using equation (1) above from the weld bead surface area S_{BEAD} and the slag surface area S_{SLAG} derived as above. The derived slag-coverage area ratio S_{RATIO} is given in Table 3.

Similarly, the maximum value W_{MAX} and minimum value W_{MIN} of the weld bead width were measured by taking the image of the surface of the region of the weld bead 6 excluding the weld bead start/finish end portions 10 (having a length of 15 mm each) and by analyzing the taken image. In the case of a weld bead 6 having a length of less than 130 mm, the image of the surface of the full length of the weld bead 6 excluding the weld bead start/finish end portions 10 was taken. In the case of a weld bead 6 having a length of 130 mm or more, the image of the surface of a portion (having a length of 100 mm) of the weld bead 6 excluding the weld bead start/finish end portions 10 was taken. The weld bead width ratio W_{RATIO} was derived by using equation (2) above from the maximum value W_{MAX} and minimum value W_{MIN} of the weld bead width measured as above. The derived weld bead width ratio W_{RATIO} is given in Table 3.

In addition, similarly, the maximum value M_{MAX} and the minimum value M_{MIN} of the cleaning width were measured by taking the image of the surface of the region of the weld bead 6 excluding the weld bead start/finish end portions 10 (having a length of 15 mm each) and by analyzing the taken image. In the case of a weld bead 6 having a length of less than 130 mm, the image of the surface of the full length of the weld bead excluding the weld bead start/finish end portions 10 was taken. In the case of a weld bead 6 having a length of 130 mm or more, the image of the surface of a portion (having a length of 100 mm) of the weld bead 6 excluding the weld bead start/finish end portions 10 was taken. Each of the measured maximum value M_{MAX} and the minimum value M_{MIN} of the cleaning width is given in Table 3.

The evaluation of "corrosion resistance" given in Table 3 was performed as follows. First, after having removed the electrodeposition coating layer by immersing the arc welded joint which had been subjected to the corrosion test in a removing solution, the corrosion product was removed in accordance with ISO 8407. Subsequently, in the case where the weld bead start/finish end portions 10 (having a length of 15 mm each) of the weld bead 6 were included, the image of the surface of the region excluding the weld bead start/finish end portions 10 was taken, and the maximum corrosion width H_{MAX} from the weld bead toe 9 was measured by analyzing the taken image. The evaluation of corrosion resistance was made in accordance with the following criteria, and the evaluation results are denoted by reference signs A to C and F.

Here, in Table 3, "reference sign A" denotes a case of "a maximum corrosion width H_{MAX} from the weld bead toe of less than 3.0 mm". "Reference sign B" denotes a case of "a maximum corrosion width H_{MAX} from the weld bead toe of 3.0 mm or more and less than 4.5 mm". "Reference sign C" denotes a case of "a maximum corrosion width H_{MAX} from the weld bead toe of 4.5 mm or more and less than 6.0 mm". "Reference sign F" denotes a case of "a maximum corrosion width H_{MAX} from the weld bead toe of 6.0 mm or more". The rank denoted by reference sign A is the highest followed by those denoted by reference signs B and C in this order, and the rank denoted by reference sign F is the lowest.

Here, as illustrated in Fig. 5, of the term "weld bead start/finish end portions", the term "weld bead start end portion" denotes a region of the weld bead from a weld bead start end position (welding start position) to a point on the welding line located 15 mm toward a weld bead finish end position (welding finish position), and the term "weld bead finish end portion" denotes a region of the weld bead from the weld bead finish end position to a point on the welding line located 15 mm toward the weld bead start end position. The term "weld bead toe" denotes a boundary in a direction perpendicular to the welding line of the weld bead between the weld metal and the unmelted base steel sheet.

The evaluation results are given in Table 3.

**[Table 1]**

| Tensile Strength of Steel Sheet | Chemical Composition of Steel Sheet (mass%) | | | | |
|---|---|---|---|---|---|
| | C | Si | Mn | P | S |
| 980 MPa | 0.060 | 0.71 | 1.80 | 0.006 | 0.001 |
| 440 MPa | 0.055 | 0.02 | 1.35 | 0.011 | 0.001 |

**[Table 2]**

| No. | Welding Current | Arc Voltage | Welding Speed | L | Shielding Gas | Tensile Strength of Steel Sheet | Wire Code | Droplet Transfer Mode | F_{AVE} | T_{CYC} | Pulse | I_{PEAK} | I_{BASE} | t_{PEAK} | t_{UP} | t_{DOWN} | t_{BASE} | X^{*1} | Note |
|---|---|---|---|---|---|---|---|---|---|---|---|---|---|---|---|---|---|---|---|
| | A | V | cm/min | mm | | MPa | | | Hz | s | | A | A | ms | ms | ms | ms | A·s/m | |
| 1 | 160 | 22.0 | 70 | 15 | Ar-20%CO₂ | 980 | W1 | Spray | - | - | With | 450 | 50 | 1.5 | 1.0 | 1.0 | 5.6 | 78.3 | Comparative Example |
| 2 | 157 | 21.6 | 70 | 15 | Ar-20%CO₂ | 980 | W1 | Short Circuit | 53 | 0.05 | without | - | - | - | - | - | - | - | Comparative Example |
| 3 | 245 | 19.6 | 90 | 10 | 100%Ar | 440 | W1 | Short Circuit | 23 | 0.48 | without | - | - | - | - | - | - | - | Comparative Example |
| 4 | 268 | 23.8 | 70 | 15 | 100%Ar | 980 | W1 | Short Circuit | 43 | 1.59 | without | - | - | - | - | - | - | - | Comparative Example |
| 5 | 189 | 22.8 | 70 | 15 | Ar-5%CO₂ | 980 | W1 | Spray | - | - | with | 450 | 50 | 1.5 | 1.0 | 1.0 | 3.7 | 78.3 | Example |
| 6 | 171 | 20.3 | 50 | 10 | Ar-5%CO₂ | 980 | W2 | Short Circuit | 91 | 0.01 | without | - | - | - | - | - | - | - | Example |
| 7 | 190 | 22.8 | 70 | 15 | Ar-5%CO₂ | 440 | W2 | Spray | - | - | with | 450 | 50 | 1.5 | 1.0 | 1.0 | 3.6 | 78.3 | Example |
| 8 | 197 | 23.0 | 70 | 15 | Ar-3%CO₂ | 980 | W1 | Spray | - | - | with | 450 | 50 | 1.5 | 1.0 | 1.0 | 3.3 | 78.3 | Example |
| 9 | 254 | 21.9 | 120 | 15 | Ar-3%CO₂ | 980 | W2 | Spray | - | - | with | 500 | 50 | 2.0 | 0.8 | 0.8 | 2.6 | 96.0 | Example |
| 10 | 219 | 22.0 | 70 | 10 | Ar-3%CO₂ | 440 | W2 | Spray | - | - | with | 450 | 50 | 1.5 | 1.0 | 1.0 | 2.4 | 117.5 | Example |
| 11 | 220 | 21.5 | 70 | 10 | Ar-1%CO₂ | 980 | W1 | Spray | - | - | with | 450 | 50 | 1.5 | 1.0 | 1.0 | 2.4 | 117.5 | Example |
| 12 | 209 | 22.1 | 50 | 10 | Ar-1%CO₂ | 980 | W1 | Spray | - | - | with | 500 | 50 | 1.5 | 1.0 | 1.0 | 3.1 | 130.0 | Example |
| 13 | 237 | 27.1 | 70 | 10 | 100%Ar | 980 | W1 | Short Circuit | 47 | 0.06 | with | 450 | 50 | 1.5 | 1.0 | 1.0 | 1.9 | 117.5 | Example |
| 14 | 295 | 25.6 | 70 | 10 | 100%Ar | 980 | W1 | Short Circuit | 70 | 0.04 | with | 450 | 50 | 1.5 | 1.0 | 1.0 | 0.6 | 117.5 | Example |
| 15 | 226 | 25.4 | 70 | 10 | 100%Ar | 980 | W1 | Short Circuit | 87 | 0.01 | with | 550 | 50 | 2.0 | 1.0 | 1.0 | 4.5 | 170.0 | Example |
| 16 | 213 | 20.8 | 70 | 15 | 100%Ar | 980 | W1 | Short Circuit | 91 | 0.01 | with | 450 | 80 | 1.5 | 1.0 | 1.0 | 2.6 | 78.3 | Example |
| 17 | 235 | 21.0 | 70 | 10 | 100%Ar | 980 | W2 | Short Circuit | 88 | 0.01 | with | 450 | 50 | 3.0 | 2.0 | 2.0 | 3.8 | 235.0 | Example |

| | | | | | | | | | | | | | | | | | | | |
|---|---|---|---|---|---|---|---|---|---|---|---|---|---|---|---|---|---|---|---|
| polarity: direct current with reverse polarity gas flow rate: 15 L/min *1. X = (I_{PEAK} × t_{PEAK}/L) + (I_{PEAK} + I_{BASE}) _{×} (t_{UP} + t_{DOWN})/(2 _{×} L) | | | | | | | | | | | | | | | | | | | |

**[Table 3]**

| No. | S_{RATIO} | W_{RATIO} | M_{MAX} | M_{MIN} | H_{MAX} | Evaluation *2 | Note |
|---|---|---|---|---|---|---|---|
| | % | % | mm | mm | mm | | |
| 1 | 36.1 | 89 | 0.1 | 0.1 | 8.5 | F | Comparative Example |
| 2 | 20.1 | 92 | 0.1 | 0.1 | 8.1 | F | Comparative Example |
| 3 | 1.7 | 56 | 6.5 | 2.9 | 6.3 | F | Comparative Example |
| 4 | 1.0 | 40 | 9.3 | 3.0 | 6.9 | F | Comparative Example |
| 5 | 12.0 | 90 | 0.1 | 0.1 | 4.8 | C | Example |
| 6 | 14.6 | 85 | 0.2 | 0.2 | 5.6 | C | Example |
| 7 | 8.5 | 96 | 1.1 | 1.0 | 4.1 | B | Example |
| 8 | 8.3 | 90 | 0.6 | 0.5 | 4.4 | B | Example |
| 9 | 6.1 | 82 | 0.6 | 0.6 | 3.6 | B | Example |
| 10 | 2.5 | 91 | 1.8 | 1.4 | 2.9 | A | Example |
| 11 | 1.3 | 87 | 2.5 | 2.0 | 2.7 | A | Example |
| 12 | 1.9 | 90 | 2.4 | 2.2 | 2.7 | A | Example |
| 13 | 1.0 | 73 | 5.5 | 4.0 | 2.0 | A | Example |
| 14 | 1.0 | 82 | 6.1 | 4.1 | 0.5 | A | Example |
| 15 | 1.0 | 64 | 6.5 | 4.0 | 2.5 | A | Example |
| 16 | 1.0 | 66 | 7.8 | 6.7 | 2.4 | A | Example |
| 17 | 1.0 | 85 | 5.6 | 3.2 | 1.9 | A | Example |

| | | | | | | | |
|---|---|---|---|---|---|---|---|
| *2. Evaluation A denotes a case of a maximum corrosion width H_{MAX} from the weld bead toe of less than 3.0 mm. B denotes a case of a maximum corrosion width H_{MAX} from the weld bead toe of 3.0 mm or more and less than 4.5 mm. C denotes a case of a maximum corrosion width H_{MAX} from the weld bead toe of 4.5 mm or more and less than 6.0 mm. F denotes a case of a maximum corrosion width H_{MAX} from the weld bead toe of 6.0 mm or more. | | | | | | | |

**[Table 4]**

| Wire Code | Chemical Composition of Welding Wire (mass%) | | | | |
|---|---|---|---|---|---|
| | C | Si | Mn | P | S |
| W1 | 0.068 | 0.57 | 1.06 | 0.006 | 0.006 |
| W2 | 0.054 | 0.90 | 1.37 | 0.005 | 0.015 |

As indicated by Tables 2 and 3, it is clarified that, in the case of welding Nos. 5 to 15, which were examples of the present invention, since S_{AATIO} was 15% or less, and since W_{RATIO} was 60% or more, arc welded joints excellent in terms of corrosion resistance were obtained.

Of these examples of the present invention, in the case of welding Nos. 7 to 15, since M_{MIN} was 0.5 mm or more, arc welded joints excellent in terms of corrosion resistance at a higher level were obtained.

In contrast, in the case of welding Nos. 1 and 2 where S_{RATIO} was more than 15%, and in the case of welding Nos. 3 and 4 where W_{RATIO} was less than 60%, that is, in the case of the comparative examples, there was a deterioration in phosphatability and electrodeposition coatability, which resulted in a deterioration in the corrosion resistance of the arc welded joints.

In addition, as indicated by the data of welding Nos 5 to 15, which were the examples of the present invention, it is clarified that arc welded joints excellent in terms of corrosion resistance were obtained regardless of whether a welding wire for an ultra-high tensile strength steel sheet (wire code W1 in Table 4) or a welding wire for a mild steel sheet (wire code W2 in Table 4) was used.

### Reference Signs List

- 1: welding wire
- 2: welding torch
- 3: steel sheet (base material)
- 4: cleaning region
- 5: arc
- 6: weld bead
- 7: molten metal (droplet)
- 8: weld pool
- 9: weld bead toe
- 10: weld bead start/finish end portion

## Claims

1. A member for electrodeposition coating comprising an arc welded joint including a weld bead, the arc welded joint being formed by arc welding steel sheets,
having a slag-coverage area ratio S_{RATIO} (%) of 15% or less, wherein S_{RATIO} is calculated by using the equation ${S}_{RATIO} = 100 \times {S}_{SLAG} / {S}_{BEAD} ,$
where an area of a surface of the weld bead formed by performing arc welding on the steel sheets is defined as a weld bead surface area S_{BEAD} (mm²) and, of the weld bead surface area S_{BEAD}, an area of a region covered with slag is defined as a slag surface area S_{SLAG} (mm²), **characterized in that**
the arc welded joint having a weld bead width ratio W_{RATIO} (%) of 60% or more, wherein W_{RATIO} is calculated by using the equation ${W}_{RATIO} = 100 \times {W}_{MIN} / {W}_{MAX}$
from a maximum value W_{MAX} (mm) and a minimum value W_{MIN} (mm) of a weld bead width in a direction perpendicular to a welding line of the weld bead,
wherein a cleaning region, in which oxides formed on a surface of the steel sheet are removed by the arc welding, is formed so as to be adjacent to a weld bead toe, and
wherein a minimum value M_{MIN} (mm) of a distance M (mm) in the direction perpendicular to the welding line between an outer edge of the cleaning region and the weld bead toe is 0.5 mm or more.

2. An arc welding method for manufacturing a member for electrodeposition coating comprising an arc welded joint including a weld bead, the arc welded joint being formed by arc welding steel sheets, the arc welded joint having a slag-coverage area ratio S_{RATIO} (%) of 15% or less, wherein S_{RATIO} is calculated by using the equation ${S}_{RATIO} = 100 \times {S}_{SLAG} / {S}_{BEAD} ,$
where an area of a surface of the weld bead formed by performing arc welding on the steel sheet is defined as a weld bead surface area S_{BEAD} (mm²) and, of the weld bead surface area S_{BEAD}, an area of a region covered with slag is defined as a slag surface area S_{SLAG} (mm²), the method being **characterized in that** the arc welded joint having a weld bead width ratio W_{RATIO} (%) of 60% or more, wherein W_{RATIO} is calculated by using the equation ${W}_{RATIO} = 100 \times {W}_{MIN} / {W}_{MAX}$
from a maximum value W_{MAX} (mm) and a minimum value W_{MIN} (mm) of a weld bead width in a direction perpendicular to a welding line of the weld bead,
wherein the arc welding is performed with reverse polarity,
wherein a cleaning region, in which oxides formed on a surface of the steel sheet are removed due to formation of a cathode spot, which is an electron-emitting source, is formed so as to be adjacent to a weld bead toe, and
wherein a minimum value M_{MIN} (mm) of a distance M (mm) in the direction perpendicular to the welding line between an outer edge of the cleaning region and the weld bead toe is 0.5 mm or more.

3. The arc welding method according to Claim 2, wherein Ar gas is used as a shielding gas in the arc welding.

4. The arc welding method according to Claim 2 or 3,
wherein a short circuit intermittently occurs between the steel sheet and a welding wire, and
wherein such a short circuit occurs at an average short circuit frequency F_{AVE} (Hz) of 20 Hz to 300 Hz with a maximum short circuit cycle T_{CYC} (s) of 1.5 s or less.

5. The arc welding method according to any one of Claims 2 to 4,
wherein pulse current is used as welding current of the arc welding, and
wherein X (A·s/m) calculated by using equation (3) from peak current I_{PEAK} (A), base current I_{BASE} (A), peak time t_{PEAK} (ms), rise time t_{UP} (ms), and fall time t_{DOWN} (ms) of the pulse current and a distance L (mm) between the steel sheet and a contact tip satisfies a relational expression 50 ≤ X ≤ 250: $X = \left({I}_{PEAK}\times {t}_{PEAK}/L\right) + \left({I}_{PEAK}+{I}_{BASE}\right) \times \left({t}_{UP}+{t}_{DOWN}\right) / \left(2\times L\right)$

6. The arc welding method according to any one of Claims 2 to 5, wherein a solid wire is used as a welding wire in the arc welding.

## Patentansprüche

1. Bauteil für galvanische Beschichtung, welches eine Lichtbogenschweißverbindung mit einer Schweißraupe umfasst, wobei die Lichtbogenschweißverbindung durch Lichtbogenschweißen von Stahlblechen gebildet wird,
mit einem Schlackenbedeckungsflächenverhältnis S_{RATIO} (%) von 15 % oder weniger, wobei S_{RATIO} unter Verwendung der Gleichung: ${S}_{RATIO} = 100 \times {S}_{SLAG} / {S}_{BEAD} ,$
berechnet wird,
wobei eine Fläche einer Oberfläche der durch Durchführen von Lichtbogenschweißen der Stahlbleche gebildeten Schweißraupe als Schweißraupen-Oberfläche S_{BEAD} (mm²) definiert ist und von der Schweißraupen-Oberfläche S_{BEAD} eine mit Schlacke bedeckte Fläche als Schlacke-Oberfläche S_{SLAG} (mm²) definiert wird, **dadurch gekennzeichnet, dass**
die Lichtbogenschweißverbindung ein Schweißraupen-Breitenverhältnis W_{RATIO} (%) von 60 % oder mehr aufweist, wobei W_{RATIO} unter Verwendung der Gleichung ${W}_{RATIO} = 100 \times {W}_{MIN} / {W}_{MAX}$
aus einem Maximalwert W_{MAX} (mm) und einem Minimalwert W_{MIN} (mm) der Schweißraupen-Breite in einer Richtung senkrecht zur Schweißlinie der Schweißraupe berechnet wird,
wobei ein Reinigungsbereich, in dem auf der Oberfläche des Stahlblechs gebildete Oxide durch das Lichtbogenschweißen entfernt werden, so ausgebildet ist, dass er an eine Schweißraupen-Einbindungslinie angrenzt, und,
wobei ein Minimalwert M_{MIN} (mm) eines Abstands M (mm) in der Richtung senkrecht zur Schweißlinie zwischen einer Außenkante des Reinigungsbereichs und der Schweißraupen-Einbindungslinie 0,5 mm oder mehr beträgt.

2. Lichtbogenschweißverfahren zum Herstellen eines Bauteils für die galvanische Beschichtung, welches eine Lichtbogenschweißverbindung mit einer Schweißraupe umfasst, wobei die Lichtbogenschweißverbindung durch Lichtbogenschweißen von Stahlblechen gebildet wird, die Lichtbogenschweißverbindung einen Schlackenbedeckungsflächenanteil S_{RATIO} (%) von 15 % oder weniger aufweist, wobei S_{RATIO} unter Verwendung der Gleichung: ${S}_{RATIO} = 100 \times {S}_{SLAG} / {S}_{BEAD} ,$ berechnet wird:
wobei eine Fläche einer Oberfläche der durch Durchführen von Lichtbogenschweißen der Stahlbleche gebildeten Schweißraupe als Schweißraupen-Oberfläche S_{BEAD} (mm²) definiert ist und von der Schweißraupen-Oberfläche S_{BEAD} eine mit Schlacke bedeckte Fläche als Schlacke-Oberfläche S_{SLAG} (mm²) definiert wird, wobei das Verfahren **dadurch gekennzeichnet ist, dass** die Lichtbogenschweißverbindung ein Schweißraupen-Breitenverhältnis W_{RATIO} (%) von 60 % oder mehr aufweist, wobei W_{RATIO} unter Verwendung der Gleichung ${W}_{RATIO} = 100 \times {W}_{MIN} / {W}_{MAX}$
ausgehend von einem Maximalwert W_{MAX} (mm) und einem Minimalwert W_{MIN} (mm) der Schweißraupenbreite in einer Richtung senkrecht zur Schweißlinie der Schweißraupe berechnet wird,
wobei das Lichtbogenschweißen mit umgekehrter Polarität durchgeführt wird,
wobei ein Reinigungsbereich, in dem auf einer Oberfläche des Stahlblechs gebildete Oxide aufgrund der Bildung eines Kathodenflecks, der eine Elektronenquelle darstellt, entfernt werden, so gebildet wird, dass er an die Schweißraupen-Einbindungslinie angrenzt, und
wobei ein Minimalwert M_{MIN} (mm) eines Abstands M (mm) in der Richtung senkrecht zur Schweißlinie zwischen einer Außenkante des Reinigungsbereichs und der Schweißraupen-Einbindungslinie 0,5 mm oder mehr beträgt.

3. Lichtbogenschweißverfahren gemäß Anspruch 2, wobei Ar-Gas als Schutzgas beim Lichtbogenschweißen verwendet wird.

4. Lichtbogenschweißverfahren gemäß Anspruch 2 oder 3,
wobei zwischen dem Stahlblech und einem Schweißdraht zeitweise ein Kurzschluss auftritt und
wobei ein solcher Kurzschluss mit einer durchschnittlichen Kurzschlussfrequenz F_{AVE} (Hz) von 20 Hz bis 300 Hz und einer maximalen Kurzschlussdauer T_{CYC} (s) von 1,5 s oder weniger auftritt.

5. Lichtbogenschweißverfahren gemäß einem der Ansprüche 2 bis 4,
wobei als Schweißstrom des Lichtbogenschweißens ein Impulsstrom verwendet wird und
wobei X (A·s/m), berechnet unter Verwendung der Gleichung (3) aus dem Spitzenstrom I_{PEAK} (A), dem Grundstrom I_{BASE} (A), der Spitzenzeit t_{PEAK} (ms), der Anstiegszeit t_{UP} (ms) und der Abfallzeit t_{DOWN} (ms) des Impulsstroms sowie eines Abstands L (mm) zwischen dem Stahlblech und einer Kontaktspitze, die Beziehungsgleichung 50 ≤ X ≤ 250 erfüllt: $X = \left({I}_{PEAK}\times {t}_{PEAK}/L\right) + \left({I}_{PEAK}+{I}_{BASE}\right) \times \left({t}_{UP}+{t}_{DOWN}\right) / \left(2\times L\right)$

6. Lichtbogenschweißverfahren gemäß einem der Ansprüche 2 bis 5, wobei beim Lichtbogenschweißen ein Massivdraht als Schweißdraht verwendet wird.

## Revendications

1. Élément destiné à un revêtement par électrodéposition comprenant un joint soudé à l'arc comportant un cordon de soudure, le joint soudé à l'arc étant formé par soudage à l'arc de tôles d'acier,
présentant un taux de superficie couverte de scories S_{RATIO} (%) de 15 % ou moins, dans lequel S_{RATIO} est calculé à l'aide de l'équation ${S}_{RATIO} = 100 \times {S}_{SLAG} / {S}_{BEAD} ,$
où une superficie de la surface du cordon de soudure formé par soudage à l'arc sur les tôles d'acier est définie comme une superficie de surface de cordon de soudure S_{BEAD} (mm²) et, parmi la superficie de surface de cordon de soudure S_{BEAD}, une superficie d'une région couverte de scories est définie comme une superficie de surface de scories S_{SLAG} (mm²), **caractérisé en ce que**
le joint soudé à l'arc présente un rapport de largeur de cordon de soudure W_{RATIO} (%) de 60 % ou plus, dans lequel W_{RATIO} est calculé à l'aide de l'équation ${W}_{RATIO} = 100 \times {W}_{MIN} / {W}_{MAX}$
à partir d'une valeur maximale W_{MAX} (mm) et d'une valeur minimale W_{MIN} (mm) d'une largeur de cordon de soudure dans une direction perpendiculaire à une ligne de soudage du cordon de soudure,
dans lequel une région de nettoyage, dans laquelle des oxydes formés sur une surface de la tôle d'acier sont éliminés par le soudage à l'arc, est formée de manière à être adjacente à un fond de cordon de soudure, et
dans lequel une valeur minimale M_{MIN} (mm) d'une distance M (mm), dans la direction perpendiculaire à la ligne de soudage, entre un bord extérieur de la région de nettoyage et le fond de cordon de soudure, est de 0,5 mm ou plus.

2. Procédé de soudage à l'arc pour fabriquer un élément destiné à un revêtement par électrodéposition comprenant un joint soudé à l'arc comportant un cordon de soudure, le joint soudé à l'arc étant formé par soudage à l'arc de tôles d'acier, le joint soudé à l'arc présentant un taux de superficie couverte de scories S_{RATIO} (%) de 15 % ou moins, dans lequel S_{RATIO} est calculé à l'aide de l'équation ${S}_{RATIO} = 100 \times {S}_{SLAG} / {S}_{BEAD} ,$
où une superficie d'une surface du cordon de soudure formé par soudage à l'arc sur la tôle d'acier est définie comme une superficie de surface de cordon de soudure S_{BEAD} (mm²) et, parmi la superficie de surface de cordon de soudure S_{BEAD}, une superficie d'une région couverte de scories est définie comme une superficie de surface de scories S_{SLAG} (mm²), le procédé étant **caractérisé en ce que** le joint soudé à l'arc présente un rapport de largeur de cordon de soudure W_{RATIO} (%) de 60 % ou plus, dans lequel W_{RATIO} est calculé à l'aide de l'équation ${W}_{RATIO} = 100 \times {W}_{MIN} / {W}_{MAX}$
à partir d'une valeur maximale W_{MAX} (mm) et d'une valeur minimale W_{MIN} (mm) d'une largeur de cordon de soudure dans une direction perpendiculaire à une ligne de soudage du cordon de soudure,
dans lequel le soudage à l'arc est réalisé avec une polarité inverse,
dans lequel une région de nettoyage, dans laquelle des oxydes formés sur une surface de la tôle d'acier sont éliminés du fait de la formation d'une tache cathodique, qui est une source émettrice d'électrons, est formée de manière à être adjacente à un fond de cordon de soudure, et
dans lequel une valeur minimale M_{MIN} (mm) d'une distance M (mm), dans la direction perpendiculaire à la ligne de soudage, entre un bord extérieur de la région de nettoyage et le fond de cordon de soudure, est de 0,5 mm ou plus.

3. Procédé de soudage à l'arc selon la revendication 2, dans lequel un gaz Ar est utilisé comme gaz de protection lors du soudage à l'arc.

4. Procédé de soudage à l'arc selon la revendication 2 ou 3,
dans lequel un court-circuit se produit de manière intermittente entre la tôle d'acier et un fil de soudage, et
dans lequel un tel court-circuit se produit à une fréquence moyenne de court-circuit F_{AVE} (Hz) de 20 Hz à 300 Hz avec un cycle maximal de court-circuit T_{CYC} (s) de 1,5 s ou moins.

5. Procédé de soudage à l'arc selon l'une quelconque des revendications 2 à 4, dans lequel un courant pulsé est utilisé comme courant de soudage du soudage à l'arc, et
dans lequel X (A·s/m), calculé à l'aide de l'équation (3) à partir d'un courant de crête I_{PEAK} (A), d'un courant de base I_{BASE} (A), d'un temps de crête t_{PEAK} (ms), d'un temps de montée t_{UP} (ms) et d'un temps de descente t_{DOWN} (ms) du courant pulsé, et d'une distance L (mm) entre la tôle d'acier et une pointe de contact, satisfait à une expression relationnelle 50 ≤ X ≤ 250 : $X = \left({I}_{PEAK}\times {t}_{PEAK}/L\right) + \left({I}_{PEAK}\times {I}_{BASE}\right) \times \left({I}_{UP}\times {t}_{DOWN}\right) / \left(2\times L\right)$

6. Procédé de soudage à l'arc selon l'une quelconque des revendications 2 à 5, dans lequel un fil plein est utilisé comme fil de soudage lors du soudage à l'arc.
